# EUROPÄISCHE PATENTANMELDUNG

(11) **EP 0 554 530 A1**
(43) Veröffentlichungstag der Anmeldung: **11.08.1993**
(21) Anmeldenummer: 92119320.7
(22) Anmeldetag: 12.11.1992
(51) Int. Cl.: B60C 27/16

(54) **Kettenglied für den Gleitschutz eines Fahrzeugrades**

(30) Priorität: 04.02.1992 DE 9201340 U
(71) Anmelder: Confon AG, CH-9424 Rheineck (CH)
(72) Erfinder: Preusker, Werner, W-7793 Sauldorf (DE)
(74) Vertreter: COHAUSZ HASE DAWIDOWICZ & PARTNER

(57) **Zusammenfassung**

Die Erfindung betritt ein Kettenglied (2) für den Gleitschutz eines Fahrzeugrades mit einem eine geschlossene Öse bildenden ersten Ende (3) zur Befestigung an einem benachbarten Kettenglied (1), und mit einem einen Haken bildenden zweiten Ende (3A) zur Befestigung in einer Öffnung eines Steges einer Platte oder eines Armes des Gleitschutzes, wobei die innere Breite (A) des Hakens gleich der Dicke des Steges, der Platte bzw. des Armes im Bereich der Befestigungsstelle ist, plus einem geringen Zumaß für eine ausreichende Beweglichkeit, und daß der innere Durchmesser der Öse gleich der inneren Breite des Hakens ist.

## Beschreibung

Die Erfindung betrifft ein Kettenglied für den Gleitschutz eines Fahrzeugrades mit einem eine geschlossene Öse bildenden ersten Ende zur Befestigung an einem benachbarten Kettenglied, und mit einem einen Haken bildenden zweiten Ende zur Befestigung in einer Öffnung eines Steges einer Platte oder eines Armes des Gleitschutzes.

Neben Schneeketten sind Gleitschutzvorrichtungen bekannt, bei denen das auf der Radlaufflache liegende Gleitschutzmittel durch Arme gehalten wird, die auf der Lauffläche aufliegen und an einer Haltevorrichtung befestigt sind, die an der Seite des Rades befestigt wird. Die Kettenglieder müssen hierbei an den Armen aus Kunststoff leicht und sicher befestigt werden. Hierzu ist es bekannt, das Endglied einer Kette hakenförmig auszubilden und in eine Öffnung des Armes oder auch eines steg- oder plattenförmigen Zwischenteiles einzuhaken. Es zeigte sich, daß diese hakenförmigen Endglieder einer erhöhten Beanspruchung ausgesetzt sind und sogar brechen.

Aufgabe der Erfindung ist es, die hakenförmigen Endglieder eines Gleitschutzmittels der eingangs genannten Art so zu verbessern, daß sie weniger beansprucht werden.

Diese Aufgabe wird erfindungsgemäß dadurch gelöst, daß die innere Breite des Hakens gleich der Dicke des Steges, der Platte bzw. des Armes im Bereich der Befestigungsstelle ist plus einem geringen Zumaß für eine ausreichende Beweglichkeit, und daß der innere Durchmesser der Öse gleich der inneren Breite des Hakens ist.

Durch eine solche Gestaltung entspricht der Außendurchmesser der Öse des Hakengliedes dem Außendurchmesser des Hakenbereichs, so daß die Öse dafür sorgt, daß das Hakenende nicht nach innen eingedrückt wird und damit sicher verhindert wird, daß es stärker verschleißt oder sogar im Bereich der Hakenbiegung abbricht.

Besonders vorteilhaft ist es, wenn das Kettenglied aus Edelstahl besteht. Auch ist von Vorteil, wenn an einem geschlossenen Verbindungs-Kettenglied zu jeder Seite ein Hakenglied befestigt ist.

Ein besserer Halt wird erreicht, wenn das Hakenende des Hakengliedes zur Seite hin abgebogen ist. Eine Längsanpassung ist dadurch erreichbar, daß das Verbindungs-Kettenglied unterschiedliche Längen aufweist.

Ein Ausführungsbeispiel der Erfindung ist in der Zeichnung dargestellt und wird im folgenden näher beschrieben. Es zeigen
- Fig. 1: ein dreigliedriges Kettenstück mit zwei hakenförmigen Kettengliedern und
- Fig. 2: eine Seitenansicht nach II in Fig. 1.
- Fig. 3: unterschiedliche Drahtquerschnitte
- Fig. 4 und 5: ein längeres Verbindungsglied
- Fig. 6 und 7: ein Hakenglied mit abgebogenem Hakenende
- Fig. 8 und 9: die Ausführung nach Figur 6 und 7 mit längerem Verbindungsglied
An einem mittleren Kettenverbindungsglied 1 sind zwei äußere Hakenglieder 2 befestigt. Hierbei ist der Draht des Hakengliedes 2 jeweils zu einer etwa kreisförmigen Öse 3 umgebogen um das Verbindungsglied 1 jeweils zu umfassen.

Das andere Ende des Radstückes des Hakengliedes 2 ist zu einem Haken 3a umgebogen, dessen Hakenende 4 auf die Öse 3 zugerichtet ist. Zwischen dem Hakenende 4 und der Öse 3 befindet sich eine Öffnung 5, um das Hakenglied 2 in eine Öffnung eines platten- oder stegförmigen Teiles, insbesondere eine Haltearmes, einhaken zu können. Dabei ist die innere Breite H des Hakens gleich der Dicke des Steges, der Platte bzw. des Armes im Bereich der Befestigungsstelle plus einem geringen Zumaß für eine ausreichende Beweglichkeit des Hakengliedes 2.

Die Öse 3 ist in ihren Abmessungen so gewählt, daß der innere Durchmesser B der Öse gleich der inneren Breite A des Hakens ist, so daß der äußere Durchmesser 6 der Öse gleich der äußeren Breite 7 des Hakens ist. Hierdurch verhindert der Durchmesser 6, daß das Hakenende 4 nach innen eingebogen wird, wenn sich das Hakenglied 2 zwischen dem Fahrzeugrad und der Straße befindet. Es wird hierdurch nicht nur der Verschleiß des Hakenendes 4 verkleinert, sondern es wird auch dafür gesorgt, daß das Hakenende 4 nicht abbricht.

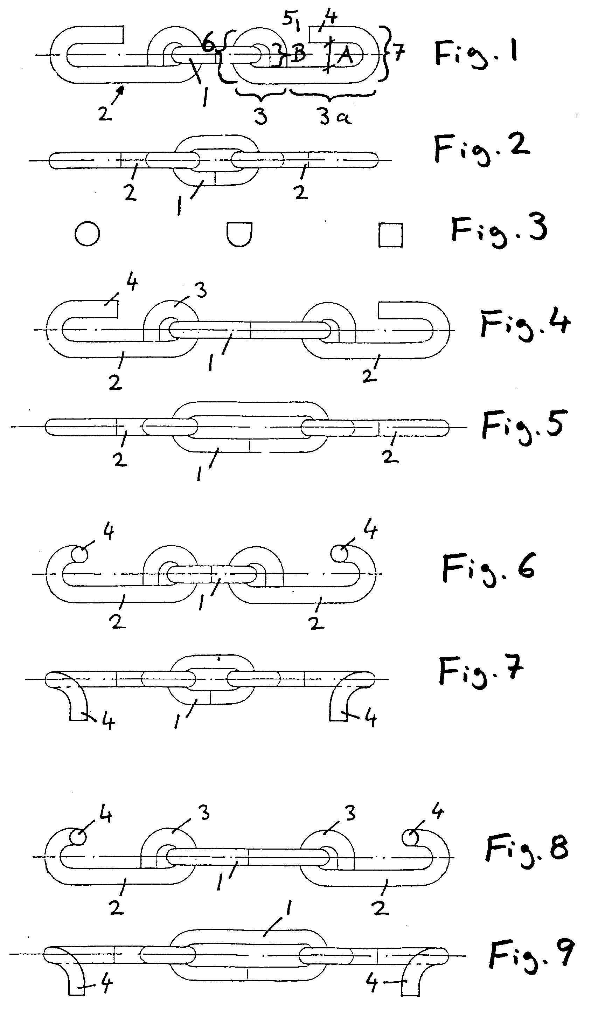

In alternativen Ausführungen nach Figur 6 bis 9 kann das Hakenende 4 zur Seite hin abgebogen sein. Der Drahtquerschnitt der Kettenglieder kann neben einer runden Form andere Formen besitzen. In Figur 3 ist noch ein quadratischer und ein U-förmiger Querschnitt gezeigt.

Durch unterschiedliche Längen des Verbindungsgliedes 1 sind unterschiedliche Gesamtlängen erreichbar.

## Patentansprüche

1. Kettenglied für den Gleitschutz eines Fahrzeugrades mit einem eine geschlossene Öse (3) bildenden ersten Ende zur Befestigung an einem benachbarten Kettenglied (1), und mit einem einen Haken (3) bildenden zweiten Ende zur Befestigung in einer Öffnung eines Steges einer Platte oder eines Armes des Gleitschutzes**, dadurch gekennzeichnet,** daß die innere Breite (A) des Hakens (3a) gleich der Dicke des Steges, der Platte bzw. des Armes im Bereich der Befestigungsstelle ist plus einem geringen Zumaß für eine ausreichende Beweglichkeit, und daß der innere Durchmesser (B) der Öse gleich der inneren Breite (A) des Hakens (3a) ist.

2. Kettenglied nach Anspruch 1, **dadurch gekennzeichnet,** daß es aus Edelstahl besteht.

3. Kettenglied nach Anspruch 1 und 2, **dadurch gekennzeichnet,** daß an einem geschlossenden Verbindungs-Kettenglied (1) zu jeder Seite ein Hakenglied (2) befestigt ist.

4. Kettenglied nach einem der vorherigen Ansprüche, **dadurch gekennzeichnet,** daß das Hakenende (4) des Hakengliedes (2) zur Seite hin abgebogen ist.

5. Kettenglied nach einem der vorherigen Ansprüche, **dadurch gekennzeichnet,** daß das Verbindungs-Kettenglied unterschiedliche Längen aufweist.
